# EUROPÄISCHE PATENTSCHRIFT

(11) **EP 3 787 108 B1**
(45) Veröffentlichungstag und Bekanntmachung des Hinweises auf die Patenterteilung: **25.01.2023**
(21) Anmeldenummer: 20184172.3
(22) Anmeldetag: 06.07.2020
(51) Int. Cl.: H01Q 1/32, H01Q 1/42, H01Q 17/00

(54) **VORRICHTUNG FÜR EIN FAHRZEUG**
DEVICE FOR A VEHICLE
DISPOSITIF POUR UN VÉHICULE

(30) Priorität: 30.08.2019 DE 102019213170
(43) Veröffentlichungstag der Anmeldung: 03.03.2021
(73) Patentinhaber: Robert Bosch GmbH, 70442 Stuttgart (DE)
(72) Erfinder: Meisel, Daniel Christoph, 76646 Bruchsal (DE); Nezadal, Martin, 71229 Leonberg (DE); Dietz, Eugen, 74357 Boennigheim (DE); Frasl, Juergen, 74912 Kirchardt (DE); Fink, Andreas, 70569 Stuttgart (DE); Pietsch, Andreas, 74321 Bietigheim-Bissingen (DE); Heider, Sven, 74321 Bietigheim-Bissingen (DE)

(56) Entgegenhaltungen:
- JP-A- 2004 309 275
- JP-A- 2007 057 483
- US-A1- 2004 036 645
- US-A1- 2015 123 872
- US-A1- 2016 370 456
- US-A1- 2017 057 441
- W. RILEY GARROTT ET AL: "Hardware Evaluation of Heavy Truck Side and Rear Object Detection Systems", KONFERENZBEITRAG ''IBEC 2003'' UND SAE TECHNICAL PAPER SERIES 2002-01-20 48, Bd. 1, 27. Februar 1995 (1995-02-27), Seite 951010, XP055733457, US ISSN: 0148-7191, DOI: 10.4271/951010
- Wabco: "BLIND SPOT DETECTION SYSTEM", , 1. Mai 2018 (2018-05-01), XP055733456, Gefunden im Internet: URL:https://www.wabco-auto.com/WabcoWeb/me dia/Library/Assets/WABCO-pictures/Document s%20(PDF)/Brochures/OnSide_Sales_Brochure_ SP18020.pdf?ext=.pdf [gefunden am 2020-09-23]

## Beschreibung

Die vorliegende Erfindung betrifft eine Vorrichtung für ein Fahrzeug, die an einem Fahrzeug, insbesondere einem Nutzfahrzeug, befestigt ist und in der mindestens ein oder mehrere Umfeldsensoren befestigt sind, wobei eine Gehäusewand der Vorrichtung, vorzugsweise die Wand in Richtung des Erfassungsbereichs der Umfeldsensoren, aus einem sensorstrahlungsdurchlässigen Material gefertigt ist und mindestens eine Gehäusewand der Vorrichtung, vorzugsweise die Wand, die in entgegengesetzter Richtung zum Erfassungsbereich der Umfeldsensoren orientiert ist, aus einem sensorstrahlungsabsorbierenden Material gefertigt ist.

### Stand der Technik

Aus der DE 10 2010 034 073 A1 ist eine Vorrichtung zur Montage einer Sensorbaugruppe an einem Kraftfahrzeug bekannt, die sich insbesondere an einem Stoßfänger des Kraftfahrzeugs befindet und zwischen der Sensorbaugruppe und dem KFZ-Anbauteil ein Formteil aufweist, das massiv ausgebildet ist und für Sensorsignale durchlässig ausgebildet ist. Das Formteil umschließt die Sensorbaugruppe dabei formschlüssig und weist eine Oberfläche auf, die komplementär zur Oberfläche des KFZ-Anbauteils geformt ist.

Eine derartige Integration eines Sensors in eine Stoßstange eines Fahrzeugs ist lediglich zur Positionierung von Sensoren an der Vorderseite und Rückseite des Fahrzeugs möglich. Weitere Montagepositionen, insbesondere seitlich am Fahrzeug, sind hierdurch nicht sinnvoll herstellbar. Weiterhin ist die Integration von Sensoren in Karosserieteilen des Fahrzeugs gemäß dem bekannten Stand der Technik nicht geeignet bei Fahrzeugen, die keine Karosseriebauteile rings um das Fahrzeug herum aufweisen, wie es beispielsweise bei Nutzfahrzeugen der Fall ist. Das Dokument JP2004309275 offenbart eine Vorrichtung gemäß dem Oberbegriff des Anspruchs 1.

### Offenbarung der Erfindung

Die Erfindung beruht sich auf eine Vorrichtung mit den Merkmalen des Anspruchs 1.

Erfindungsgemäß wird dieses durch die Merkmale des unabhängigen Anspruchs erreicht. Vorteilhafte Weiterbildungen und Ausgestaltungen ergeben sich aus den Unteransprüchen.

Vorteilhafter Weise ist vorgesehen, dass die Vorrichtung eine gemeinsame Spannungsversorgung und/oder eine gemeinsame Anbindung an mindestens ein Datenbussystem des Fahrzeugs aufweist. Dabei kann diese gemeinsame Spannungsversorgung die Spannungsversorgung sämtlicher, in der Vorrichtung untergebrachter Sensoren, übernehmen. Zusätzlich oder alternativ kann die Datenbusanbindung alle in der Vorrichtung untergebrachten Sensoren an ein Kraftfahrzeugbussystem anbinden und den Datenaustausch mit anderen Fahrzeugsystemen ermöglichen. Weiterhin ist denkbar, dass sowohl die Spannungsversorgung als auch die Datenbusanbindung aller Sensoren über ein einzelnes, mehradriges Kabel oder einen Kabelbaum erfolgt.

Hierdurch ist es möglich, dass nicht für jeden Sensor eine eigene Spannungsversorgung und ein eigener Datenbusanschluss realisiert werden muss, wodurch sich der Verkabelungsaufwand reduziert. Das Datenbussystem kann ein Datentransfersystem sein, eine Datenschnittstelle sein oder ein Datenkommunikationssystem sein.

Weiterhin ist es vorteilhaft, dass die Umfeldsensoren Radarsensoren sind.

Radarsensoren sind heute sehr klein und sehr kostengünstig herstellbar und sind geeignet, das Fahrzeugumfeld zu überwachen und den Fahrer zu informieren, falls Verkehrsteilnehmer wie Fahrradfahrer in gefährlichen Bereichen detektiert werden, beispielsweise im toten Winkel wenn das Fahrzeug abbiegen möchte. Radarsensoren bieten hierbei den Vorteil, dass sie sehr scharf abgegrenzte Erfassungsbereiche haben können und damit zuverlässig Verkehrsteilnehmer in speziellen Umfeldbereichen des Fahrzeugs detektieren können.

Gemäß der Erfindung sind in der Vorrichtung Absorber zur Absorption eines Teils der Sensorstrahlung angebracht.

Dabei können Absorber vorgesehen sein, die beispielsweise als Schaumstoff ausgeführt sind und absorbierende Eigenschaften für elektromagnetische Strahlen aufweisen, beispielsweise indem Metallpartikel in den Schaumstoff eingearbeitet sind. Wahlweise kann zusätzlich oder alternativ auch Kunststoff mit Kohleanteil verwendet werden, wie es beispielsweise unter der Bezeichnung Cawiton^{®} von auf dem Markt angeboten wird. Derartige oder ähnliche Absorber können an den Innenseiten der nicht strahlungsdurchlässigen Vorrichtungswände angebracht sein, um unerwünschte Reflexionen zu reduzieren. Gemäß der Erfindung sind auch zwischen den einzelnen Sensoren innerhalb der Vorrichtung Absorber vorgesehen, so dass sich die Sensoren untereinander mit ihrer abgestrahlten und empfangenen Leistung nicht beeinträchtigen.

Anstatt Absorbern können auch Reflektoren verwendet werden (jedoch nicht gemäß der Erfindung), wobei es möglich ist, nur Reflektoren einzusetzen (jedoch nicht gemäß der Erfindung) oder Absorber und Reflektoren beliebig miteinander zu kombinieren. Je nach Erfordernis hinsichtlich der Ausleuchtung der erwünschten Detektionsbereiche und der sich dabei ergebeneden Reflexionen können Absorber und Reflektoren auch gemischt verbaut werden. Die Reflektoren könne dabei aus Metall gefertigt sein oder aus metallbeschichtetem Kunststoff bestehen und so ausgeführt und montiert sein, dass störende elektromagnetische Strahlung in Raumrichtungen reflektiert werden, in denen der Sensor weder detektieren möchte noch andere Sensoren oder Geräte angebracht sind und gestört werden. Damit werden die störenden elektromagnetische Strahlen in Raumrichtungen wegreflektiert, in denen keine Störungen zu erwarten sind.

Weiterhin ist es vorteilhaft, dass die Umfeldsensoren Lidarsensoren und/oder Videosensoren sind. Dabei kann das sensorstrahlungsdurchlässige Material der Vorrichtung, das in Richtung des Sensorerfassungsbereichs orientiert ist, für die optische Sensorstrahlung, beispielsweise für Infrarotstrahlung durchlässig sein. Hierdurch ist es möglich, dass Infrarotkameras, die Objekte im Fahrzeugumfeld detektieren können, geschützt sind und für den Beobachter unsichtbar und optisch ansprechend verbaut sind.

Weiterhin ist es vorteilhaft, dass die Umfeldsensoren für die Überwachung des Vorhandenseins von Objekten im toten Winkel des Fahrzeugs vorgesehen sind. Dabei können die Umfeldsensoren Sensorerfassungsbereiche haben, die so ausgerichtet sind, dass Objekte im toten Winkel des Fahrzeugs erfasst werden. Derartige Vorrichtungen können insbesondere so angeordnet sein, dass deren Erfassungsbereich einen toten Winkel des Fahrzeugs, also einen Bereich des Fahrzeugumfelds, das durch den Fahrer nicht einsehbar ist, überwacht werden.

Gemäß der Erfindung ist die Vorrichtung am Fahrzeug im Bereich zwischen der Vorderachse und der Hinterachse anbringbar.

Bei Fahrzeugen mit mehreren Hinterachsen ist die Vorrichtung im Bereich zwischen der Vorderachse und der vordersten Hinterachse anbringbar.

Bei Nutzfahrzeugen in Leiterrahmenbauweise bietet der Bereich zwischen Vorderachse und der vordersten Hinterachse vielfältige Montagemöglichkeiten, wobei in diesem Bereich bereits Vorrichtungen wie Kraftstoffbehälter oder Abgaseinrichtungen verbaut sein können. Dabei ist zu beachten, dass die Vorrichtung so gestaltet ist, dass diese am Rahmen des Fahrzeugs, also von der seitlichen Fahrzeugsilhouette nach innen zurückspringt und damit die Vorrichtung in ihrer Dimensionierung so gestaltet ist, dass die Außenseite der Vorrichtung mit der Fahrzeugsilhouette abschließt. Daher ist es auch besonders vorteilhaft, die Vorrichtung benachbart zum Kraftstofftank des Fahrzeugs oder zu Abgaseinrichtungen des Fahrzeugs anzubringen. Weiterhin ist es vorteilhaft, dass die Vorrichtung oberhalb des Kraftstofftanks, insbesondere zwischen der Fahrerkabine und dem Nutzaufbau des Fahrzeugs angebracht ist. Der Nutzaufbau des Fahrzeugs kann beispielsweise eine Ladefläche, ein Kofferaufbau, ein Tankaufbau oder ein sonstiger Aufbau des Fahrzeugs sein, so dass die Vorrichtung zwischen der Vorderkante dieses Nutzaufbaus und der Rückseite der Fahrerkabine untergebracht werden kann. Dabei kann die Vorrichtung so orientiert werden, dass der Erfassungsbereich im Wesentlichen in Fahrzeugquerrichtung, also rechtwinklig zur üblichen Fahrtrichtung des Fahrzeugs, orientiert ist.

Weiterhin ist es vorteilhaft, dass die Vorrichtung jeweils auf beiden Seiten des Fahrzeugs, insbesondere beidseits paarweise, angebracht sind.

Es wird darauf hingewiesen, dass einige der Möglichkeiten Merkmale und Vorteile der Erfindung hierin mit Bezug auf unterschiedliche Ausführungsformen beschrieben sind. Ein Fachmann erkennt, dass die Merkmale in geeigneter

Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsbeispiele der Erfindung anhand von Zeichnungen erläutert.

Es zeigen
- Figur 1: eine schematische Draufsicht auf die Skizze eines erfindungsgemäßen Fahrzeugs,
- Figur 2: eine schematische Seitenansicht einer Skizze des erfindungsgemäßen Fahrzeugs,
- Figur 3: eine Skizze eines Querschnitts durch die erfindungsgemäße Vorrichtung und
- Figur 4: eine weitere Skizze eines Querschnitts durch die erfindungsgemäße Vorrichtung mit Darstellung einer Ausführungsform der Absorber.

### Ausführungsformen der Erfindung

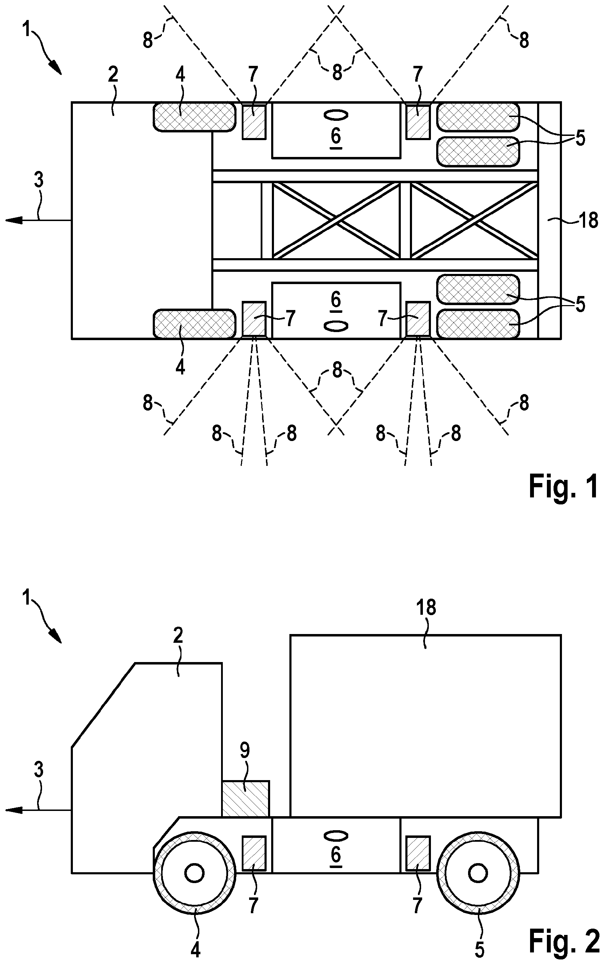

In Figur 1 ist eine schematische Draufsicht auf ein Fahrzeug 1 gezeigt, das mit der erfindungsgemäßen Vorrichtung 7 für Umfeldsensoren ausgerüstet ist. Dabei handelt es sich bei dem Fahrzeug 1 vorzugsweise um ein Nutzfahrzeug, das so orientiert ist, dass dieses normalerweise in Richtung der Fahrtrichtung 3 nach links orientiert fährt. Dieses Fahrzeug 1 weist im vorderen Bereich die Fahrerkabine 2 auf, in der sich der Fahrer und gegebenenfalls Beifahrer befinden und unterhalb derer meist der Motor eingebaut ist. Weiterhin sind im Bereich der Fahrerkabine 2 die Räder der Vorderachse 4 dargestellt. Im hinteren Bereich des Fahrzeugs 1, also am rechten Rand der Figur 1, befinden sich die Räder der vordersten Hinterachse, die in Figur 1 als Zwillingsreifen ausgeführt sind. Zwischen den Rädern der Vorderachse 4 und den Rädern der vordersten Hinterachse 5 befinden sich bei Nutzfahrzeugen häufig die Kraftstoffbehälter 6, die ebenfalls schematisch dargestellt sind. Die erfindungsgemäße Vorrichtung 7, die zur Aufnahme von Umfeldsensoren vorgesehen ist, kann dabei mehrfach verbaut werden, beispielsweise direkt hinter den Rädern der Vorderachse oder auch zwischen dem Kraftstofftank 6 und den vordersten Rädern der Hinterachse 5. Die Vorrichtungen 7 sind hierbei als Vorrichtungen ausgeführt, die direkt oder unter Zuhilfenahme einer Haltevorrichtung am Leiterrahmen des Fahrzeugs 1 montiert werden können oder an anderen Komponenten, beispielsweise den Kraftstoffbehälter, befestigbar sind.

Die Vorrichtungen 7 weisen dabei ein oder mehrere Umfeldsensoren auf, die so orientiert sind, dass deren Erfassungsbereiche 8 das Umfeld des Fahrzeugs 1 erfassen. Dabei kann in einer Vorrichtung 7 nur ein einzelner Umfeldsensor verbaut sein, wie es beispielsweise bei den beiden oberen Vorrichtungen 7 in Figur 1 dargestellt ist oder aber auch mehrere Umfeldsensoren enthalten, so dass jede der Vorrichtungen 7 zwei oder mehr Umfelderfassungsbereiche 8 aufweist, wie in den beiden unteren Vorrichtungen 7 der Figur 1 dargestellt wurde.

In Figur 2 ist eine schematische Seitenansicht des erfindungsgemäßen Fahrzeugs 1 dargestellt. Dieses ist dabei wieder so orientiert, dass sich dieses üblicherweise in Fahrtrichtung 3 orientiert ist, also bei normaler Geradeausfahrt in Figur 2 nach links fahren würde. Das Fahrzeug 1 weist wieder die Fahrerkabine 2 auf, in der sich Fahrer und Beifahrer befinden und auf dem Motorraum angeordnet ist. Weiterhin sind die Räder der Vorderachse 4 dargestellt, sowie die Räder der vordersten Hinterachse 5, auf denen sich das Fahrzeug 1 fortbewegt. Zwischen den Rädern der Vorderachse 4 und den vordersten Rädern der Hinterachse 5 sind wiederum Komponenten des Fahrzeugs, wie beispielsweise der Kraftstoffbehälter 6, eingezeichnet. Alternativ zum Kraftstoffbehälter 6 ist es ebenfalls möglich, dass Abgaseinrichtungen des Fahrzeugs 1 vorgesehen sind oder Kisten mit Stauraum für Fahrzeugzubehör vorgesehen sind. Weiterhin sind zwischen den Rädern der Vorderachse 4 und den Rädern der vordersten Hinterachse 5 Vorrichtungen 7 dargestellt, die am Fahrzeug oder Fahrzeugkomponenten befestigt sind und ein oder mehrere Fahrzeugumfeldsensoren erfindungsgemäß aufnehmen. Weiterhin ist in Figur 2 ein Nutzaufbau 18 dargestellt, der beispielsweise eine Ladefläche, einen Kofferaufbau oder andere Nutzaufbauten des Fahrzeugs darstellt, je nachdem für welche Aufgabe das Fahrzeug vorgesehen ist. Zwischen der Fahrerkabine 2 und dem Nutzaufbau 18 des Fahrzeugs ergibt sich meist ein Zwischenraum, indem sich erfindungsgemäß eine Vorrichtung für Umfeldsensoren 9 anbringen lässt, die beispielsweise die Bereiche seitlich neben dem Fahrzeug 1 hinsichtlich weiterer Verkehrsteilnehmer überwacht und den Fahrer warnen kann.

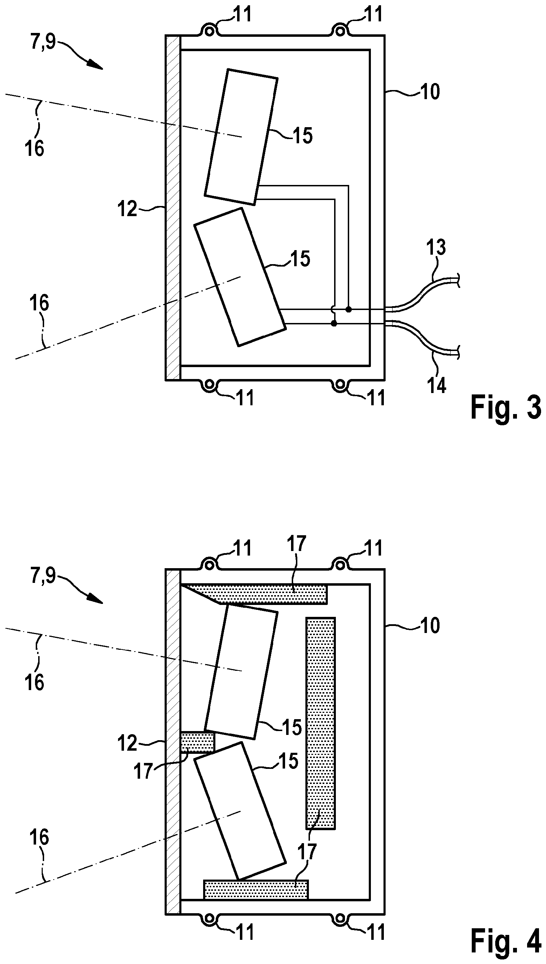

In Figur 3 ist die Vorrichtung 7 bzw. Vorrichtung 9 zur Aufnahme von Sensoreinrichtungen in einem schematischen Querschnitt dargestellt. Zu erkennen ist die Gehäuseschale 10, die nach einer Seite offen ausgeführt ist. Dabei kann der Boden sowie die Seitenwände der Gehäuseschale 10 vorteilhafter Weise aus einem sensorstrahlungsabsorbierenden Material hergestellt sein, so dass Sensorstrahlung von Sensoren 15 im Inneren der Vorrichtung 7, 9 in unerwünschte Richtungen nicht nach außen dringt oder nur sehr stark gedämpft nach außen dringt. Die Gehäuseschale 10 ist an der offenen Seite mittels eines Deckels 12 aus sensorstrahlungsdurchlässigem Material verschlossen. Dabei ist das sensorstrahlungsdurchlässige Material auf die Wellenlänge der im inneren befindlichen Sensoren 15 abgestimmt, so dass die Sensorstrahlung in Richtung der Sensorhauptachsen 16 der Sensoren 15 den Deckel 12 der Vorrichtung 7 durchdringen können. Die Gehäuseschale 10 kann dabei Montageösen 11 oder Befestigungsösen 11 aufweisen, mit denen die Vorrichtung 7, 9 am Fahrzeug 1 oder unter Zuhilfenahme eines Halters für die Vorrichtung 7, 9 befestigt werden kann. Weiterhin weist die Vorrichtung 7, 9 Anschlüsse 13, 14 auf, mittels denen die Sensoren 15 im Inneren der Vorrichtung 7, 9 an eine Spannungsversorgung 13 sowie alternativ oder zusätzlich an ein ein Datenbussystem des Fahrzeugs 1 angeschlossen sind.

Ebenfalls denkbar ist die Anbindung an die Spannungsversorgung 13 und die Anbindung an ein Datenbussystem 14 nicht separat auszuführen, sondern mittels eines einzelnen, mehradrigen Kabels oder Kabelbaumes auszuführen. Weiterhin ist es möglich, dass jeder Sensor 15 im Inneren der Vorrichtung 7, 9 eine eigene, also separate Spannungsversorgung 13 und/oder eine separate Anbindung an das Datenbussystem 14 aufweist. Alternativ ist es im Rahmen der Erfindung weiterhin möglich, dass jeder Sensor 15 einen eigenen, sprich separaten Anschluß aufweist, wobei dieser Anschluß jeweils aus einer Kombination aus Spannungsversorgung und Datenbusanbindung besteht.

In Figur 4 ist die Sensoranordnung aus Figur 3 in ähnlicher Weise abgebildet. Zu erkennen ist wiederum die Gehäuseschale 10 mit den Montageösen 11 und dem Deckel 12, der die Gehäuseschale 10 abschließt und in Erfassungsrichtung der im Inneren angeordneten Sensoren 15 montiert ist. Im Inneren der Vorrichtung 7, 9 sind die Sensoren 15 dargestellt, die Sensorstrahlung in Richtung der Sensorhauptachsen 16 abstrahlen und empfangen können. Selbstverständlich weist auch die in Figur 4 dargestellte Vorrichtung 7, 9 Anschlüsse an eine Spannungsversorgung 13 und/oder an ein Datenbussystem 14 auf. In Figur 4 sind weiterhin Absorber 17 eingezeichnet, die aus einem Material herstellt sind, das die von den Sensoren 15 verwendete Wellenlänge besonders gut dämpfen kann, beispielsweise indem die elektromagnetische Strahlung dieses Wellenlängenbereichs möglichst vollständig absorbiert wird.

Diese in Figur 4 dargestellten Absorber 17 sind dabei geeignet, unerwünschte Reflexionen im Inneren der Vorrichtung 7, 9 zu vermeiden, Abstrahlungen in andere Richtungen als in den gewünschten Richtungen der Hauptstrahlrichtungen 16 zu unterbinden sowie ein Übersprechen oder Stören zwischen den Sensoren 15 innerhalb einer Vorrichtung 7, 9 möglichst zu unterbinden. Die Sensoren 15 im Inneren der Vorrichtung 7, 9 sind dabei fest montiert, vorzugsweise indem diese fest an der Gehäuseschale 10 mittels Befestigungsvorrichtungen fixiert sind. Dabei können die Absorber 17 so gestaltet sein, dass diese auf die jeweilige Anordnung der Sensoren 15 im Inneren der Vorrichtung 7, 9 angepasst sind.

## Patentansprüche

1. Vorrichtung (7), die an einem Fahrzeug (1), bei welchem es sich um ein Nutzfahrzeug handelt, befestigt ist wobei in der Vorrichtung (7) mehrere Umfeldsensoren (15) befestigt sind, und eine Gehäusewand (12) der Vorrichtung (7), bei welcher es sich um eine Wand in Richtung des Erfassungsbereichs (8, 16) der Umfeldsensoren (15) handelt, aus einem sensorstrahlungsdurchlässigen Material gefertigt ist und mindestens eine Gehäusewand (10) der Vorrichtung (7), bei welcher es sich um eine Wand in entgegengesetzter Richtung zum Erfassungsbereich (8, 16) der Umfeldsensoren (15) handelt, aus einem sensorstrahlungsabsorbierenden Material gefertigt ist, wobei die Vorrichtung (7) an dem Fahrzeug derart anbringbar ist, dass eine Außenseite der Vorrichtung (7) mit einer Fahrzeugsilhouette abschließt und derart orientierbar ist, dass der Erfassungsbereich rechtwinklig zur Fahrtrichtung des Fahrzeugs orientierbar ist, und wobei die Vorrichtung (7) am Fahrzeug (1) im Bereich zwischen einer Vorderachse (4) und einer vordersten Hinterachse (5) anbringbar ist, wobei im Inneren der Vorrichtung (7) Absorber (17) zur Absorption eines Teils der Sensorstrahlung angebracht sind **dadurch gekennzeichnet, dass** zwischen den einzelnen Sensoren innerhalb der Vorrichtung (7) Absorber (17) vorhanden sind.

2. Vorrichtung nach Anspruch 1, **dadurch gekennzeichnet, dass** die Umfeldsensoren (15) in der Vorrichtung (7) eine gemeinsame Spannungsversorgung (13) und/oder eine gemeinsame Anbindung an mindestens ein Datenbussystem (14) des Fahrzeugs (1) haben.

3. Vorrichtung nach Anspruch 1 oder 2, **dadurch gekennzeichnet, dass** die Umfeldsensoren (15) Radarsensoren sind.

4. Vorrichtung nach einem der Ansprüche 1 bis 3, **dadurch gekennzeichnet, dass** die Umfeldsensoren (15) Lidarsensoren und/oder Videosensoren sind.

5. Vorrichtung nach einem der Ansprüche 1 bis 4, **dadurch gekennzeichnet, dass** die Umfeldsensoren (15) für die Überwachung des Vorhandenseins von Objekten im Toten Winkel des Fahrzeugs (1) vorgesehen sind und einen Sensorerfassungsbereich (8) haben und so ausgerichtet sind, dass Objekte im Tote Winkel des Fahrzeugs (1) erfasst werden.

6. Vorrichtung nach einem der Ansprüche 1 bis 5, **dadurch gekennzeichnet, dass** die Vorrichtung (7) benachbart zum Kraftstofftank (6) des Fahrzeugs (1) angebracht ist.

7. Vorrichtung nach einem der Ansprüche 1 bis 4, **dadurch gekennzeichnet, dass** die Vorrichtung (7) oberhalb des Kraftstofftanks (6) und zwischen der Fahrerkabine (2) und dem Nutzaufbau (18) des Fahrzeugs (1), angebracht ist.

8. Vorrichtung nach einem der vorhergehenden Ansprüche, **dadurch gekennzeichnet, dass** die Vorrichtung (7) jeweils auf beiden Seiten des Fahrzeugs (1) und beidseits paarweise, angebracht sind.

## Claims

1. Apparatus (7) which is fastened to a vehicle (1) which is a commercial vehicle, wherein a plurality of environmental sensors (15) are fastened in the apparatus (7), and a housing wall (12) of the apparatus (7), which is a wall in the direction of the capture region (8, 16) of the environmental sensors (15), is produced from a sensor-radiation-transmissive material, and at least one housing wall (10) of the apparatus (7), which is a wall in the opposite direction to the capture region (8, 16) of the environmental sensors (15), is produced from a sensor-radiation-absorbing material, wherein the apparatus (7) can be fitted to the vehicle in such a manner that an outer side of the apparatus (7) terminates with a vehicle silhouette and can be oriented in such a manner that the capture region can be oriented at right angles to the direction of travel of the vehicle, and wherein the apparatus (7) can be fitted to the vehicle (1) in the region between a front axle (4) and a frontmost rear axle (5), wherein absorbers (17) for absorbing part of the sensor radiation are fitted in the interior of the apparatus (7), **characterized in that** absorbers (17) are present between the individual sensors inside the apparatus (7).

2. Apparatus according to Claim 1, **characterized in that** the environmental sensors (15) in the apparatus (7) have a common voltage supply (13) and/or a common connection to at least one data bus system (14) of the vehicle (1).

3. Apparatus according to Claim 1 or 2, **characterized in that** the environmental sensors (15) are radar sensors.

4. Apparatus according to one of Claims 1 to 3, **characterized in that** the environmental sensors (15) are lidar sensors and/or video sensors.

5. Apparatus according to one of Claims 1 to 4, **characterized in that** the environmental sensors (15) are provided for the purpose of monitoring the presence of objects in the blind spot of the vehicle (1) and have a sensor capture region (8) and are oriented in such a manner that objects in the blind spot of the vehicle (1) are captured.

6. Apparatus according to one of Claims 1 to 5, **characterized in that** the apparatus (7) is fitted adjacent to the fuel tank (6) of the vehicle (1).

7. Apparatus according to one of Claims 1 to 4, **characterized in that** the apparatus (7) is fitted above the fuel tank (6) and between the driver's cab (2) and the usable structure (18) of the vehicle (1).

8. Apparatus according to one of the preceding claims, **characterized in that** the apparatuses (7) are respectively fitted on both sides of the vehicle (1) and in pairs on both sides.

## Revendications

1. Dispositif (7) qui est fixé à un véhicule (1) qui est en particulier un véhicule utilitaire, dans lequel plusieurs capteurs d'environnement (15) sont fixés dans le dispositif (7), et une paroi de boîtier (12) du dispositif (7), qui est une paroi en direction de la zone de détection (8, 16) des capteurs d'environnement (15), est fabriquée d'un matériau transparent au rayonnement des capteurs, et au moins une paroi de boîtier (10) du dispositif (7), qui est une paroi dans la direction opposée à la zone de détection (8, 16) des capteurs d'environnement (15), est fabriquée d'un matériau absorbant le rayonnement des capteurs, dans lequel le dispositif (7) peut être installé sur le véhicule de telle sorte qu'une face extérieure du dispositif (7) est en affleurement avec une silhouette de véhicule, et est orientable de telle sorte que la zone de détection peut être orientée perpendiculairement au sens de la marche du véhicule, et dans lequel le dispositif (7) peut être installé sur le véhicule (1) dans la zone entre un essieu avant (4) et un essieu arrière (5) le plus avancé, dans lequel à l'intérieur du dispositif (7) des absorbeurs (17) sont disposés pour absorber une partie du rayonnement des capteurs,
**caractérisé en ce que** des absorbeurs (17) sont présents entre les différents capteurs à l'intérieur du dispositif (7).

2. Dispositif selon la revendication 1, **caractérisé en ce que** les capteurs d'environnement (15) présentent dans le dispositif (7) une alimentation en tension commune (13) et/ou une liaison commune à au moins un système de bus de données (14) du véhicule (1).

3. Dispositif selon la revendication 1 ou 2, **caractérisé en ce que** les capteurs d'environnement (15) sont des capteurs radar.

4. Dispositif selon l'une quelconque des revendications 1 à 3, **caractérisé en ce que** les capteurs d'environnement (15) sont des capteurs lidar et/ou des capteurs vidéo.

5. Dispositif selon l'une quelconque des revendications 1 à 4, **caractérisé en ce que** les capteurs d'environnement (15) sont prévus pour la surveillance de la présence d'objets dans l'angle mort du véhicule (1) et présentent une zone de détection de capteur (8), et sont alignés de telle sorte que des objets dans l'angle mort du véhicule (1) sont détectés.

6. Dispositif selon l'une quelconque des revendications 1 à 5, **caractérisé en ce que** le dispositif (7) est installé de façon adjacente au réservoir de carburant (6) du véhicule (1).

7. Dispositif selon l'une quelconque des revendications 1 à 4, **caractérisé en ce que** le dispositif (7) est installé au-dessus du réservoir de carburant (6) et entre la cabine de conducteur (2) et la superstructure utilitaire (18) du véhicule (1).

8. Dispositif selon l'une quelconque des revendications précédentes, **caractérisé en ce que** les dispositifs (7) sont installés respectivement des deux côtés du véhicule (1) et par paires des deux côtés.
